(19) Europäisches Patentamt / European Patent Office / Office européen des brevets

(11) EP 3 084 410 B1

(12) **EUROPEAN PATENT SPECIFICATION**

(45) Date of publication and mention
of the grant of the patent:
**12.06.2019 Bulletin 2019/24**

(21) Application number: **14872103.8**

(22) Date of filing: **15.12.2014**

(51) Int Cl.:
**G01N 27/30** (2006.01)    **G01N 27/327** (2006.01)

(86) International application number:
**PCT/US2014/070364**

(87) International publication number:
**WO 2015/095061 (25.06.2015 Gazette 2015/25)**

(54) **ELECTRODE AND METHOD FOR MAKING AN ELECTRODE**

ELEKTRODE UND VERFAHREN ZUR HERSTELLUNG EINER ELEKTRODE

ÉLECTRODE ET PROCÉDÉ DE FABRICATION D'UNE ÉLECTRODE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.12.2013 US 201361916569 P**

(43) Date of publication of application:
**26.10.2016 Bulletin 2016/43**

(73) Proprietor: **Saint-Gobain Performance Plastics
Corporation
Aurora, OH 44202 (US)**

(72) Inventors:
• **DIGUET, Antoine
F-93 303 Aubervilliers (FR)**
• **LEYDER, Charles
F-75019 Paris (FR)**

(74) Representative: **Zimmermann & Partner
Patentanwälte mbB
Postfach 330 920
80069 München (DE)**

(56) References cited:
WO-A2-00/73785          WO-A2-2013/086007
US-A1- 2008 138 624     US-A1- 2009 104 428
US-A1- 2010 112 578     US-A1- 2010 175 992
US-A1- 2012 161 268

• A. AXELEVITCH ET AL: "Investigation of Optical
Transmission in Thin Metal Films", PHYSICS
PROCEDIA, vol. 32, no. 81, 1 January 2012
(2012-01-01), pages 1-13, XP055387269,
AMSTERDAM, NL ISSN: 1875-3892, DOI:
10.1016/j.phpro.2012.03.510
• Anthony J Morfa ET AL: "Transparent metal
electrodes from ordered nanosphere arrays",
Journal of Applied Physics, 7 August 2013
(2013-08-07), page 54502, XP055477185, DOI:
10.1063/1.4816790 Retrieved from the Internet:
URL:https://www.nature.com/articles/am2017
177

**Description**

## TECHNICAL FIELD

The present disclosure relates to an electrode, and more particularly to, a thin film electrode for biosensor applications.

## BACKGROUND ART

WO 2013/052092 describes an electrochemical glucose biosensor comprising two electrodes with at least one of electrodes having both a metallic layer and a non-metallic layer in direct contact with the metallic layer. The reactivity of some noble metal electrodes is generally more pronounced immediately after production and significantly aged products can be eliminated from use. The non-metallic layer is a carbon layer that is used to create an activated electrode that, when new, mimics the characteristics of a non-activated product that has not been aged. In other words, the sensitivity of the electrode is sacrificed for a consistent reading of potential.

However, there is a continuing need for an electrode with improved performance. For example, reducing the amount of metal, particularly expensive metals such as gold, used in the electrode can reduce cost. Further, there remains a need for an electrode with a reduced amount of metal that can maintain performance. Moreover, there remains a need for an electrode with improved sheet resistance.

## BRIEF DESCRIPTION OF THE DRAWINGS

Embodiments are illustrated by way of example and are not limited by the accompanying figure.

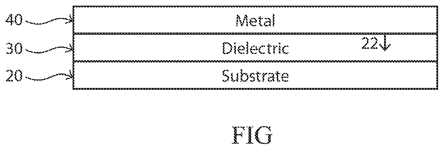

FIG. 1 shows an embodiment of an electrode according to this disclosure.

Skilled artisans appreciate that elements in the figures are illustrated for simplicity and clarity and have not necessarily been drawn to scale. For example, the dimensions of some of the elements in the figures can be exaggerated relative to other elements to help to improve understanding of embodiments of the invention.

## DETAILED DESCRIPTION OF THE PREFERRED EMBODIMENTS

The following description in combination with the figures is provided to assist in understanding the teachings disclosed herein. The following discussion will focus on specific implementations and embodiments of the teachings. This focus is provided to assist in describing the teachings and should not be interpreted as a limitation on the scope or applicability of the teachings. However, other embodiments can be used based on the teachings as disclosed in this application.

The terms "comprises," "comprising," "includes," "including," "has," "having" or any other variation thereof, are intended to cover a non-exclusive inclusion. For example, a method, article, or apparatus that comprises a list of features is not necessarily limited only to those features but can include other features not expressly listed or inherent to such method, article, or apparatus. Further, unless expressly stated to the contrary, "or" refers to an inclusive-or and not to an exclusive-or. For example, a condition A or B is satisfied by any one of the following: A is true (or present) and B is false (or not present), A is false (or not present) and B is true (or present), and both A and B are true (or present).

Also, the use of "a" or "an" is employed to describe elements and components described herein. This is done merely for convenience and to give a general sense of the scope of the invention. This description should be read to include one, at least one, or the singular as also including the plural, or vice versa, unless it is clear that it is meant otherwise. For example, when a single item is described herein, more than one item can be used in place of a single item. Similarly, where more than one item is described herein, a single item can be substituted for that more than one item.

Unless otherwise defined, all technical and scientific terms used herein have the same meaning as commonly understood by one of ordinary skill in the art to which this invention belongs. The materials, methods, and examples are illustrative only and not intended to be limiting. To the extent not described herein, many details regarding specific materials and processing acts are conventional and can be found in textbooks and other sources within the electrode and bionsensor arts.

The following disclosure describes an electrode containing a substrate, a first layer (which can be a dielectric layer), and a second layer (which is a layer containing a metal). In certain embodiments, the electrode can be a thin film electrode, such as a thin film electrode for biosensors that measure the glucose level in a sample, such as a blood sample. The following disclosure also describes biosensor test strips that include an electrode and methods of forming an electrode. The electrode includes a substrate, a first layer, and a second layer. The introduction of the first layer as described herein can improve the quality of the electrode. For example, it is possible to improve the sheet resistance, or decrease the amount of material used for the second layer, particularly the amount of expensive metals such as gold, and maintain the same sheet resistance, as compared to an electrode without the first layer. The concepts are better understood in view of the embodiments described below that illustrate and do not limit the scope of the present invention.

FIG. 1 illustrates an electrode 10 containing a substrate 20, a first layer 30, and a second layer 40 disposed on the substrate 20. As illustrated, the first layer 30 is disposed directly adjacent the substrate 20 such that the first layer 30 is directly contacting the substrate 20. Additionally, the second layer 40 is disposed directly adjacent the first layer 30 such that the second layer 40 is directly contacting the first layer 30.

The first layer directly contacts the substrate and the second layer In particular embodiments, the electrode can include additional layers.

An electrode according to this disclosure can be an inert electrode, such as an inert thin film electrode. The second layer is a layer that includes a metal.

In certain embodiments, the electrode can be a biosensor electrode, such as, for example, a biosensor electrode that can measure the glucose level of a sample, such as a blood sample. In particular embodiments, the electrode can contain a layer comprising a chemical solution, such as a solution containing an enzyme, a mediator, an indicator, or any combination thereof. In particular embodiments, the electrode can be reactive to glucose. For example, glucose can be indirectly degraded by the electrode by first reacting with an enzyme to form a subproduct and the electrode is reactive with the subproduct.

The electrode can be part of a biosensor, such as a biosensor test strip adapted to measure the level of glucose in a sample, such as a blood sample. In certain embodiments, the test strip can include a working electrode and a counter electrode and the electrode described herein can be present as the working electrode, the counter electrode, or both.

In certain embodiments, the first layer and the second layer can be epitaxial layers and, particularly, heteroepitaxial layers. In more particular embodiments, the first layer can be a growth underlayer and the second layer can be an epitaxial overlayer. Epitaxy refers to the deposition of a crystalline overlayer over a crystalline underlayer. Homoepitaxy refers to the overlayer and the underlayer being formed of the same material. Heteroepitaxy refers to the epitaxial overlayer being formed on a growth underlayer of a different material. In epitaxial growth, the underlayer can act as a seed crystal locking the overlayer into one or more ordered crystallographic orientations with respect to the underlayer. Growth can be non-epitaxial if the overlayer does not form an ordered layer with respect to the underlayer.

In certain embodiments, the introduction of a growth underlayer can improve the quality of the electrode, such as to improve its sheet resistance. In other words, as compared to an electrode without the growth underlayer, it has been surprisingly discovered that in certain embodiments, it is possible to decrease the amount of metal in the epitaxial overlayer by about 10% while maintaining the same sheet resistance of the electrode.

Sheet resistance measures the electrical resistance of thin films that are nominally uniform in thickness. Commonly, electrical resistivity is presented in units such as $\Omega \cdot cm$. To obtain a sheet resistance value, electrical resistivity is divided by the sheet thickness, and the unit can be represented as $\Omega$. To avoid being misinterpreted as bulk resistance of 1 ohm, an alternate common unit for sheet resistance is "ohms per square" (denoted "$\Omega$/sq" or "$\Omega/\square$"), which is dimensionally equal to an ohm, but is exclusively used for sheet resistance.

While the sheet resistance is a measure of the whole electrode, the contribution of the substrate and the first layer are negligible. For example, in one embodiment, the substrate can provide no contribution to the sheet resistance of the electrode. In further embodiments, the contribution of a 5 nm AZO underlayer to the total measured sheet resistance of the electrode is negligible, such as about 0.0005 Ohm/sq.

In certain embodiments, the electrode can have a sheet resistance of no greater than 2.0 Ohms/sq, such as, no greater than 1.95 Ohms/sq, no greater than 1.9 Ohms/sq, no greater than 1.85 Ohms/sq, no greater than 1.8 Ohms/sq, no greater than 1.75 Ohms/sq, no greater than 1.7 Ohms/sq, no greater than 1.65 Ohms/sq, no greater than 1.6 Ohms/sq, no greater than 1.55 Ohms/sq, or no greater than 1.5 Ohms/sq. In further embodiments, the electrode can have a sheet resistance of no less than 0.7 Ohms/sq, such as, no less than 0.75 Ohms/sq, no less than 0.8 Ohms/sq, or no less than 0.85 Ohms/sq. Moreover, the electrode can have a sheet resistance in a range of any of the maximum and minimum values described above, such as in the range of from 1.0 Ohms/sq to 2.0 Ohms/sq, or from 1.2 Ohms/sq to 1.8 Ohms/sq.

As discussed above, the sheet resistance of the electrode can be related, such as directly proportional, to the thickness of the second layer (or the layer comprising a metal). In other words, in certain embodiments, the sheet resistance of the electrode can tend to decrease as the thickness of the second layer increases. In addition, as discussed above, it has been surprisingly discovered that it is possible to decrease the amount of material used for the second layer while maintaining the same sheet resistance as a conventional electrode, such as without a first layer.

In certain embodiments where the second layer has a thickness of 50 nm, the electrode can have a sheet resistance of no greater than 1.50 Ohm/sq, such as, no greater than 1.40 Ohm/sq, no greater than 1.30 Ohm/sq, no greater than 1.20 Ohm/sq, no greater than 1.10 Ohm/sq, no greater than 1.09 Ohm/sq, no greater than 1.08 Ohm/sq, or even no greater than 1.07 Ohm/sq. In further such embodiments, the electrode can have a sheet resistance of no less than 0.1 Ohm/sq, such as, no less than 0.2 Ohm/sq, no less than 0.3 Ohm/sq, no less than 0.4 Ohm/sq, no less than 0.5 Ohm/sq, no less than 0.6 Ohm/sq, or even no less than 0.7 Ohm/sq. Moreover, certain embodiments of the electrode having a second layer with a thickness of 50 nm can have a sheet resistance in a range of any of the maximum and minimum values described above, such as in the range of from 0.6 Ohm/sq to 1.5 Ohm/sq, from 0.6 Ohm/sq to 1.3 Ohms/sq, or from 0.7 Ohm/sq to 1.1 Ohm/sq.

In certain embodiments where the second layer has a thickness of 45 nm, the electrode can have a sheet resistance of no greater than 1.7 Ohm/sq, such as, no greater than 1.6 Ohm/sq, no greater than 1.5 Ohm/sq, no greater than 1.4 Ohm/sq, or no greater than 1.3 Ohm/sq. In further such embodiments, the electrode can have a sheet resistance of no less than 0.4 Ohm/sq, such as, no less than 0.5 Ohm/sq, no less than 0.6 Ohm/sq, no less than 0.7 Ohm/sq, no less than 0.8 Ohm/sq, no less than 0.9 Ohm/sq, or even no less than 1.0 Ohm/sq. Moreover, certain embodiments of the electrode having a second layer with a thickness of 45 nm can have a sheet resistance in a range of any of the maximum and minimum values described above, such as in the range of from 0.8 Ohm/sq to 1.7 Ohm/sq, from 0.9 Ohm/sq to 1.5 Ohms/sq, or from 1.0 Ohm/sq to 1.3 Ohm/sq.

In certain embodiments where the second layer has a thickness of 40 nm, the electrode can have a sheet resistance of no greater than 1.8 Ohm/sq, such as, no greater than 1.7 Ohm/sq, no greater than 1.6 Ohm/sq, no greater than 1.5 Ohm/sq, or no greater than 1.4 Ohm/sq. In further such embodiments, the electrode can have a sheet resistance of no less than 0.5 Ohm/sq, such as, no less than 0.6 Ohm/sq, no less than 0.7 Ohm/sq, no less than 0.8 Ohm/sq, no less than 0.9 Ohm/sq, no less than 1.0 Ohm/sq, or even no less than 1.1 Ohm/sq. Moreover, certain embodiments of the electrode having a second layer with a thickness of 40 nm can have a sheet resistance in a range of any of the maximum and minimum values described above, such as in the range of from 0.9 Ohm/sq to 1.8 Ohm/sq, from 1.0 Ohm/sq to 1.6 Ohms/sq, or from 1.1 Ohm/sq to 1.4 Ohm/sq.

The substrate, first layer, second layer, and any additional layers are described in more detail below.

The substrate 20 can be constructed out of any material suitable for the substrate of an electrode. In certain embodiments, the material forming the substrate can contain a polymer, a flexible polymer, or a transparent polymer. Suitable polymers can include, for example, polycarbonate, polyacrylate, polyester, polyethylene terephthalate (PET), polyethylene naphthalate (PEN), cellulose triacetated (TCA or TAC), polyurethane, or any combination thereof. In particular embodiments, the substrate can be a glass substrate, such as a transparent glass substrate.

In certain embodiments, the substrate has a thickness suitable for an electrode. In particular embodiments, the substrate can have a thickness of no less than 50 microns, such as, no less than 40 microns, no less than 30 microns, no less than 20 microns, or no less than 10 microns. In particular embodiments, the substrate can have a thickness of no greater than 1,000 microns, such as, no greater than 750 microns, no greater than 500 microns, no greater than 400 microns, or no greater than 300 microns. In further embodiments, the substrate can have a thickness in a range of any of the above minimum and maximum values described above, such as in a range of from 20 microns to 500 microns or from 40 microns to 300 microns. In very particular embodiments, the substrate can have a thickness in a range of from 100 microns to 300 microns.

The surface 22 of the substrate 20 adjacent to first layer 30 can be mechanically treated to improve adhesion between the substrate and first layer 30. For example, mechanically treating the surface 22 of the substrate 20 can include blasting or mechanically etching the surface 22 of the substrate 20. The surface 22 of the substrate 20 can be mechanically treated. In certain embodiments, the surface 22 of the substrate 20 has a surface roughness ($R_{rms}$) in a range of from 1 nm to 200 nm. In particular embodiments, the surface 22 of the substrate 20 has a surface roughness ($R_{rms}$) in a range of from 100 nm to about 200 nm, from about 120 nm to about 180 nm, or even from about 140 nm to about 160 nm. In further particular embodiments, the surface 22 of the substrate 20 has a surface roughness ($R_{rms}$) in a range of from 1 nm to 5 nm, from 1 nm to 4 nm, or even from 1 nm to 3 nm.

Referring again to FIG. 1, first layer 30 is disposed over substrate 20. For example, first layer 30 is disposed between substrate 20 and second layer 40. The first layer can contain one or more of the following materials and the one or more materials contained in the first layer can have one or more, or even all, of the following characteristics.

The first layer comprises an inorganic material comprising aluminum zinc oxide (AZO), indium tin oxide (ITO), antimony tin oxide (ATO), fluorine tin oxide (FTO), or any combination thereof. In very particular embodiments, the first layer can contain AZO.

In certain embodiments, the decrease in sheet resistance can occur when the crystal structure of the first layer matches or closely matches the crystal structure of the second layer. The crystal structure of a material (the arrangement of atoms within a given type of crystal) can be described in terms of its simplest repeating unit, referred to as a unit cell, having unit-cell-edge lengths *a, b,* and c, referred to as lattice parameters. In this context, the crystal structure of the first layer closely matches the crystal structure of the second layer when the lattice parameters *a* of the first layer ($a_1$) and the second layer ($a_2$) satisfy the following formula:

$$([sqrt(2)/2]*a_2)/a_1 = x,$$

where x represents a value of no less than 0.65. In particular embodiments, x represents a value of no less than 0.70, no less than 0.75, no less than 0.80, no less than 0.82, no less than 0.84, or no less than 0.86. In further particular embodiments, x represents a value of no greater than 1.5, no greater than 1.4, no greater than 1.3, no greater than 1.2, no greater than 1.1, or no greater than 1.0. Moreover, x can represent a value in a range of any of the above minimum and maximum values described above, such as in a range of from 0.75 to 1.4, from 0.84 to 1.2, or even from 0.86 to 1.0.

For example, the crystal structure of gold is face centered cubic (fcc) and its lattice parameter $a$ is 0.408 nm. Because the crystal structure of gold is cubic, it can have only one lattice parameter. Under ambient conditions, ZnO mainly crystallizes under wurtzite form. Lattice parameters for ZnO in wurtzite form are $a$ = 0.325 nm and c = 0.520 nm. When this form is oriented in the so-called (002) orientation, the surface can have atom distances similar to that of gold when the gold crystal is oriented in the so called (111) orientation. That is, ([sqrt(2)/2] x $a_{Au}$) ~ $a_{ZnO}$, which corresponds to 0.29 nm -0.33 nm. The effect with AZO (=ZnO:Al) can be similar, even when Al atoms are intercalated in the network. In very particular embodiments, AZO and gold can be used as first and second layers, respectively.

On the other hand, if Au is deposited on another dielectric, such as TiOx, the heteroepitaxy effect is not effective since the mismatch between crystal structures is high. For example, when TiOx is deposited by magnetron sputtering without thermal treatment, the material can be amorphous (in this case there is no specific order) or can have a rutile crystal structure. A rutile crystal structure has a body-centered tetragonal unit cell with a = b = 0.458 nm and c = 0.295 nm. In certain embodiments, from this structure, TiOx does not appear to have a crystal structure that closely matches the crystal structure of an Au unit cell, regardless of orientation. In particular embodiments, the first layer can be free of tin oxide.

In particular embodiments, the first layer does not contain carbon. In further particular embodiments, the first layer does not contain carbon in the form of graphite.

In certain embodiments, an inorganic material can be present in the first layer in an amount of no less than 50%, such as, no less than 55%, no less than 60%, no less than 65%, no less than 70%, no less than 75%, no less than 80%, no less than 85%, no less than 90%, or no less than 95% by weight of the first layer. In further embodiments, a dielectric material can be present in the dielectric layer in an amount of 100%, no greater than 99%, no greater than 95%, no greater than 90%, no greater than 85%, no greater than 80%, or no greater than 75% by weight of the first layer. In further embodiments, an inorganic material can be present in the first layer in an amount in a range of any of the above minimum and maximum values described above, such as in a range of from 50% to 100%, 60% to 90%, or 70% to 90% by weight of the first layer.

In certain embodiments, the material that forms the first layer can comprise a crystalline material. In particular embodiments, the crystalline material can be composed of crystallites-such as small crystals, or microscopic crystals, or nanocrystallites, or a combination thereof. Crystallite size refers to the diameter of a single crystallite. One or more crystallites form what is often referred to as a grain. In other words, a grain of the crystalline material can contain one or more crystallites. Thus, in certain embodiments, grain size, which refers to the diameter of a single grain, can be the same as, or different than, crystallite size. The grains of a crystalline material interface at boundaries known as grain boundaries. The number of grain boundaries increase as the grain size decreases.

In certain embodiments, the first layer can contain a polycrystalline material. Polycrystalline material refers to a material composed of crystallites that vary in size and/or orientation. In particular embodiments, the variation or variations can be random or directed.

In certain embodiments, the first layer, or the material contained in the first layer, can have an electrical resistivity (p) of no greater 1 Ohm.cm, no greater than $1\times10^{-2}$ Ohm.cm, no greater than $8\times10^{-3}$ Ohm.cm, or no greater than $5\times10^{-3}$ Ohm.cm. In further embodiments, the first layer, or the material contained in the first layer, can have an electrical resistivity (p) of no less than $1\times10^{-4}$ Ohm.cm, no less than $5\times10^{-4}$ Ohm.cm, or no less than $1\times10^{-3}$ Ohm.cm. In even further embodiments, the first layer, or the material contained in the first layer, can have an electrical resistivity (p) in a range of any of the above minimum and maximum values described above, such as in a range of from $1\times10^{-5}$ Ohm.cm to 1 Ohm.cm, $1\times10^{-4}$ to $1\times10^{-2}$ Ohm.cm, or from $1\times10^{-3}$ to $5\times10^{-3}$ Ohm.cm.

In certain embodiments, the first layer can have a thickness of no greater than 20 nm, such as, no greater than 17 nm, no greater than 15 nm, no greater than 13 nm, no greater than 10 nm, no greater than 7 nm, or no greater than 5 nm. In further embodiments, the first layer can have a thickness of no less than 1 nm, such as, no less than 2 nm, no less than 3 nm, no less than 4 nm, or no less than 5 nm. In even further embodiments, the first layer can have a thickness in a range of any of the above minimum and maximum values described above, such as in a range of from 1 nm to 20 nm, from 3 nm to 10 nm, or from 4 nm to 6 nm. In very particular embodiments, the first layer can have a thickness of from 4 to 6 nm.

In certain embodiments, the first layer can consist essentially of a metal oxide. As used herein, the phrase "consisting essentially of a metal oxide" refers to at least 95 atomic % of a metal oxide. Moreover, in particular embodiments, the second layer can contain an essentially pure metal or in other embodiments, a metal alloy. As used herein, "essentially pure metal" refers to a metal oxide having possible impurities in an amount of less than about 5 atomic %.

Referring again to FIG. 1, second layer 40 is disposed over substrate 20, such as over first layer 30 and substrate 20. For example, second layer 40 is disposed over first layer 30 and substrate 20 such that first layer 30 is disposed between second layer 40 and substrate 20, such as over and substrate 20. The second layer can contain one or more of the following materials and the one or more materials contained in the second layer can have one or more, or even all, of the following characteristics.

The second layer can be described in terms of its thickness. In certain embodiments, the second layer can have a thickness of from has a thickness of no less than 20 nm, such as, greater than 20 nm, no less than 25 nm, no less than 30 nm, no less than 35 nm, no less than 40 nm, no less than 45 nm, or no less than 50 nm. In further embodiments, the second layer can have a thickness of no greater than 70 nm, such as, less than 70 nm, no greater than 65 nm, no greater than 60 nm, no greater than 55 nm, or no greater than 50 nm. In even further embodiments, the second layer can have a thickness in a range of any of the above minimum and maximum values described above, such as in a range of from 20 nm to 70 nm, from 30 nm to 60 nm, or from 40 nm to 50 nm. In very particular embodiments, the first layer can have a thickness in a range of from 40 nm to 50 nm or from 35 nm to 45 nm.

In certain embodiments, the second layer can comprise a film, such as a thin film. In particular embodiments, the second layer can comprise a thin film having a thickness in the ranges described above for the second layer.

In certain embodiments, the second layer can have a Total Thickness Variation (TTV) of no greater than 15 nm, no greater than 10 nm, no greater than 8 nm, no greater than 6 nm, no greater than 5 nm, or even no greater than 4 nm. As used herein, the TTV is the difference between maximum and minimum thickness values along a square millimeter segment spanning the length and width of the sheet. This difference can also be described as a percentage, such as a percentage of the segment having the highest thickness value. The percentage can be no greater than 20%, no greater than 15%, no greater than 12%, or no greater than 10%.

The second layer can be described in terms of its performance, such as Visible Light Transmittance (VLT). VLT is a measure of the amount the visible spectrum (380 to 780 nanometers) that is transmitted through a composite, typically presented as a percentage. The VLT can be measured according to standard ISO 9050. Although ISO 9050 refers to glazings, the same procedure can be used with a film taped or otherwise adhered to a transparent substrate.

The second layer has a VLT of no greater than 40%, no greater than 35%, no greater than 30%, no greater than 25%, no greater than 20%, no greater than 15%, no greater than 10%, no greater than 5%, no greater than 4%, no greater than 3%, no greater than 2%, or no greater than 1%. In further embodiments, the second layer can have a VLT of no less than 10%, no less than 5%, no less than 4%, no less than 3%, no less than 2%, or no less than 1%. In even further embodiments, the second layer can have a VLT of 0%. Moreover, the second layer can have a VLT in a range of any of the maximum and minimum values described above, such as in the range of from 0% to 40%, from 5% to 20%, or from 7.5% to 12%.

In certain embodiments, the second layer can be substantially non-transparent, such as non-transparent. Substantially non-transparent refers to having a VLT of no greater than about 10% and non-transparent refers to having a VLT of no greater than 1%.

The VLT of the second layer can be related, such as inversely proportional, to the thickness of the second layer. In other words, in certain embodiments, the VLT of the second layer can tend to decrease as the thickness of the second layer increases. In particular embodiments, when the second layer has a thickness of 50 nm, the second layer can have a VLT of no greater than 20%, no greater than 15%, or no greater than 10%. In further particular embodiments, when the second layer has a thickness of 45 nm, the second layer can have a VLT of no greater than 25%, no greater than 20%, or no greater than 15%. In even further particular embodiments, when the second layer has a thickness of 40 nm, the second layer can have a VLT of no greater than 30%, no greater than 25%, or no greater than 20%.

The second layer contains a metal. Suitable metals can include noble metals. In certain embodiments, the second layer can contain ruthenium, rhodium, palladium, silver, osmium, iridium, platinum, gold, or any combination thereof. In particular embodiments, the second layer can contain silver or gold. In very particular embodiments, the second layer can contain gold.

In certain embodiments, the second layer can contain a metal in an amount of no less than 50%, no less than 60%, no less than 70%, no less than 80%, no less than 90%, or no less than 99% by weight of the second layer. In further embodiments, the second layer can contain a metal in an amount of from no greater than 70%, no greater than 80%, no greater than 90%, no greater than 99% by weight of the second layer. Moreover, the second layer can contain a metal in an amount in a range of any of the maximum and minimum values described above, such as in the range of from 60% to 70%, or from 70% to 80%, or from 80% to 90%, or from 90% to 95%, or from 95% to 100%.

In certain embodiments, the second layer can contain a material, such as a metal, having a conductivity of no greater than $1\times10^{-5}$ Ohm.cm, no greater than $9\times10^{-6}$ Ohm.cm, no greater than $8\times10^{-6}$ Ohm.cm, no greater than $7\times10^{-6}$ Ohm.cm, or no greater than $6\times10^{-6}$ Ohm.cm. In certain embodiments, the second layer can contain a material, such as a metal, having a conductivity of no less than $1\times10^{-6}$ Ohm.cm, no less than $2\times10^{-6}$ Ohm.cm, no less than $3\times10^{-6}$ Ohm.cm, or no less than $4\times10^{-6}$ Ohm.cm. Moreover, the second layer can contain a material, such as a metal, having a conductivity in a range of any of the maximum and minimum values described above, such as in the range of from $1\times10^{-6}$ to $1\times10^{-5}$ Ohm.cm or from $3\times10^{-6}$ to $8\times10^{-6}$ Ohm.cm. In very particular embodiments, the second layer can contain a metal having a conductivity of from $4\times10^{-6}$ to $6\times10^{-6}$ Ohm.cm.

In certain embodiments, the second layer can contain a polycrystalline material. In particular embodiments, the polycrystalline material can have random or directed variations. In further embodiments, the crystals or crystallites in the polycrystalline material can have a certain structure or system, such as a face-centered crystal cubic system.

In certain embodiments, the second layer can consist essentially of a metal. As used herein, the phrase "consisting essentially of a metal" refers to at least 95 atomic % of a metal. Moreover, in particular embodiments, the second layer can contain an essentially pure metal or in other embodiments, a metal alloy. As used herein, "essentially pure metal" refers to a metal having possible impurities in an amount of less than about 5 atomic %.

In other embodiments, the second layer any of the one or more metal based layers can contain a metal alloy, such as for example containing a predominant metal in a concentration of at least about 70 atomic %, and a minor metal in a concentration of less than about 30 atomic % based on the total weight of the metal based layer. In particular embodiments, the second layer can contain an alloy of noble metals. In particular embodiments, the second layer can contain a metal alloy that includes two or more of the noble metals listed above. In very particular embodiments, the second layer can contain an alloy of silver and gold, such as a 50/50 alloy of silver and gold.

As discussed above, Applicants discovered that it is possible to decrease the amount of metal in the second layer and achieve a sheet resistance similar to that of an electrode without a first layer, particularly a dielectric layer. For example, the second layer having a thickness of 50 nm can comprise metal in an amount in a range of from 0.8 to 1.0 $g/m^2$. As shown in the Examples, that amount can be reduced by about 10%, such as by reducing the thickness of the second layer to a 45 nm, and achieve a sheet resistance similar to that of a 50 nm metal layer in an electrode without a first layer, particularly a dielectric layer. In certain embodiments, the second layer can contain metal in an amount of from 0.65 $g/m^2$ to 0.95 $g/m^2$, from 0.67 $g/m^2$ to 0.93 $g/m^2$, or even from 0.70 $g/m^2$ to 0.91 $g/m^2$.

Also described herein are electrochemical sensors. In certain embodiments, the electrochemical sensors can be adapted to detect the presence of, and/or measure the concentration of, an analyte by way of electrochemical oxidation and reduction reactions within the sensor. These reactions can be transduced to an electrical signal that can be correlated to an amount or concentration of the analyte. In certain embodiments, the electrochemical sensor can be a biosensor test strip.

In particular embodiments, the test strip can include a base substrate, a spacing layer, a covering layer, or any combination thereof. The base substrate can include an electrode system and the electrode system can include a set of measuring electrodes, e.g., at least a working electrode and a counter electrode, within a sample-receiving chamber. One or more of the electrodes in the electrode system can include an electrode as described herein.

Further, in particular embodiments, the spacing layer of the test strip can define a sample-receiving chamber extending between the base substrate and the covering layer. The sample-receiving chamber can be adapted such that a sample fluid can enter a chamber and be placed in electrolytic contact with both the working electrode and the counter electrode. Such contact can allow electrical current to flow between the measuring electrodes to effect the electrooxidation or electroreduction of the analyte. In very particular embodiments, the sample fluid can be a blood sample, such as a human blood sample, and the sensor can be adapted to measure the glucose level in such a sample.

Moreover, a suitable reagent system can overlie at least a portion of the electrodes or electrode pairs within the sample-receiving chamber. The reagent system can include additives to enhance the reagent properties or characteristics. For example, additives can include materials to facilitate the placement of the reagent composition onto the test strip and to improve its adherence to the strip, or for increasing the rate of hydration of the reagent composition by the sample fluid. Additionally, the additives can include components selected to enhance the physical properties of the resulting dried reagent layer, and the uptake of a liquid test sample for analysis. In certain embodiments, the additives can include thickeners, viscosity modulators, film formers, stabilizers, buffers, detergents, gelling agents, fillers, film openers, coloring agents, agents endowing thixotropy, or any combination thereof.

In further embodiments, the covering layer can be adapted to form a top surface of the sample-receiving chamber. Moreover, the covering layer can be adapted to provide a hydrophilic surface to aid in acquisition of the test sample. In particular embodiments, the covering layer can define a vent opening that allows air to escape from the interior of the chamber as the sample fluid enters and moves into the sample-receiving chamber.

The electrode can be formed according to any appropriate method. In general, forming the electrode includes providing a substrate, depositing the first layer, and depositing the second layer. For example, the first layer can be deposited over the substrate and the second layer can be deposited over the first layer. In certain embodiments, the first layer can be deposited directly onto the substrate. In certain embodiments, the second layer can be deposited directly onto the first layer.

The method can include depositing one or more of the layers by physical vapor deposition, such as sputtering, such as magnetron sputtering. The first layer can be deposited with or without annealing. In certain embodiments, the first layer can be deposited without annealing. The materials used for forming the first layer can have a standard deposition rate.

The first layer and the second layer can be deposited by roll-to-roll processing. Roll-to-roll processing refers to a process of applying coatings starting with a roll of a flexible material and re-reeling after the process to create an output roll. In certain embodiments, the roll-to-roll process can include depositing the first and second layers using two cathodes, such as simultaneously using two cathodes.

Embodiments of the method described herein can increase the production time and the TTV of the coating. The TTV of the coating is described above. In certain embodiment, the method can increase production time by 10% as compared to conventional methods of forming a similar electrode without a first layer, particularly a dielectric layer.

The present disclosure represents a departure from the state of the art. In particular, it has heretofore been unknown how to form an electrode which can provide the performance characteristics, and particularly the combination of performance characteristics described herein. For example, the present disclosure illustrates various electrodes having a dielectric layer and a layer comprising a metal. Such constructions as described in detail herein have unexpectedly been found to exhibit significantly superior sheet resistance that were heretofore impossible to achieve relative to its thickness.

Many different aspects and embodiments are possible.

These and other unexpected and superior characteristics are illustrated in the Example below, which are exemplary and not limiting, in any way, to the embodiments described herein.

EXAMPLES

The electrode of Examples 1-17 were formed by depositing a layer of aluminum-doped zinc oxide (AZO) from a ceramic target and a layer of gold (Au) on a substrate having a thickness of between 50 and 250 microns (Melinex 329 and Melinex ST505 from Dupont Teijin, and SH41 from SKC). The AZO and Au layers were formed on the substrate with a batch magnetron sputtering deposition machine, with a low power density applied on the target. The type of substrate and the thicknesses of the AZO and Au layers for the respective examples are listed in Table 1.

Each example was measured to determine the sheet resistance of the electrode. The measurement was taken according to an electromagnetic non-contact method using a Nagy apparatus. The results are reported in Table 1 below. The VLT of the metal layer in each example was no greater than 40%.

Table 1

|  | Substrate | AZO | Au | R/sq (Ohm/sq) | Sheet Resistance Improvement |
|---|---|---|---|---|---|
| Ex. 1 | Melinex 329 | 5 nm | 50 nm | 1.068 | 11.7% |
| Ex. 2 | Melinex 329 | - | 50 nm | 1.209 | |
| Ex. 3 | Melinex 329 | 5 nm | 45 nm | 1.216 | 5.0% |
| Ex. 4 | Melinex 329 | - | 45 nm | 1.280 | |
| Ex. 5 | Melinex 329 | 5 nm | 40 nm | 1.376 | - |
| Ex. 6 | SH41 | 5 nm | 50 nm | 1.007 | 15.5% |
| Ex. 7 | SH41 | - | 50 nm | 1.192 | |
| Ex. 8 | SH41 | 5 nm | 45 nm | 1.110 | 8.3% |
| Ex. 9 | SH41 | - | 45 nm | 1.210 | |
| Ex. 10 | SH41 | 5 nm | 40 nm | 1.304 | 3.9% |
| Ex. 11 | SH41 | - | 40 nm | 1.357 | |
| Ex. 12 | ST505 | 5 nm | 50 nm | 1.000 | 19.5% |
| Ex. 13 | ST505 | - | 50 nm | 1.243 | |
| Ex. 14 | ST505 | 5 nm | 45 nm | 1.121 | 11.9% |
| Ex. 15 | ST505 | - | 45 nm | 1.272 | |
| Ex. 16 | ST505 | 5 nm | 40 nm | 1.241 | 12.7% |
| Ex. 17 | ST505 | - | 40 nm | 1.421 | |

The results in Table 1 confirm an improvement in resistivity on average of more than 10% due to the introduction of the AZO layer. In addition, the results in Table 1 show that 5 nm AZO with 45 nm Au gives a similar or better R/sq to that of 50 nm Au without AZO.

Note that not all of the activities described above in the general description or the examples are required, that a portion of a specific activity can not be required, and that one or more further activities can be performed in addition to those described. Still further, the order in which activities are listed is not necessarily the order in which they are performed.

Benefits, other advantages, and solutions to problems have been described above with regard to specific embodiments. However, the benefits, advantages, solutions to problems, and any feature(s) that can cause any benefit, advantage, or solution to occur or become more pronounced are not to be construed as a critical, required, or essential feature of any or all the claims.

The specification and illustrations of the embodiments described herein are intended to provide a general understanding of the structure of the various embodiments. The specification and illustrations are not intended to serve as an exhaustive and comprehensive description of all of the elements and features of apparatus and systems that use the structures or methods described herein. Separate embodiments can also be provided in combination in a single embodiment, and conversely, various features that are, for brevity, described in the context of a single embodiment, can also be provided separately or in any subcombination. Further, reference to values stated in ranges includes each and every value within that range. Many other embodiments can be apparent to skilled artisans only after reading this specification. Other embodiments can be used and derived from the disclosure, such that a structural substitution, logical substitution, or another change can be made without departing from the scope of the disclosure. Accordingly, the disclosure is to be regarded as illustrative rather than restrictive.

**Claims**

1. An electrode comprising:

   a substrate (20);
   a first layer (30) comprising an inorganic material; and
   a second layer (40) comprising a metal and having a visible light transmittance of 40% or less,
   wherein the first layer (20) is disposed between the substrate (20) and the second layer (40),

   wherein the first layer (30) is directly contacting the substrate (20) and the second layer (40) is directly contacting the first layer (30), and wherein the inorganic material comprises aluminum zinc oxide (AZO), indium tin oxide (ITO), antimony tin oxide (ATO), fluorine tin oxide (FTO), or any combination thereof.

2. The electrode according to claim 1, wherein the second layer (40)

   (b) has a thickness of greater than 20 nm, or
   (c) has a sheet resistance of 2.0 Ohm/sq or less.

3. The electrode of any one of the preceding claims, wherein the inorganic material of the first layer (30) has a lattice parameter $a_1$ and the metal of the second layer (40) has a lattice parameter $a_2$, where $a_1$ and $a_2$ satisfy the following formula:

$$([sqrt(2)/2]*a_2)/a_1 = x,$$

   where x represents a value in a range of from 0.75 to 1.4.

4. The electrode of any one of the preceding claims, wherein the first layer (30) comprises the inorganic material in an amount of from 50% to 100% by weight of the first layer (30).

5. The electrode of any one of the preceding claims, wherein the layer (40) comprising a metal comprises a noble metal.

6. The electrode of any one of the preceding claims wherein the layer (40) comprising a metal has a thickness of 50 nm and the electrode has a sheet resistance of no greater than 1.50 Ohm/sq.

7. The electrode of any one of the preceding claims, wherein the layer (40) comprising a metal has a thickness of from 20 nm to 70 nm.

8. The electrode of any one of the preceding claims, wherein the first layer (30) comprises the inorganic material in an amount of no greater than 75% by weight of the first layer.

9. The electrode of any one of the preceding claims, wherein the first layer (30) comprises the inorganic material in an amount of no less than 50% by weight of the first layer (30).

10. A biosensor test strip comprising an electrode according to any one of the preceding claims.

11. A method of forming an electrode, comprising:

   providing a substrate (20);
   depositing on the substrate (20) a first layer (30) comprising an inorganic material; and
   depositing heteroepitaxially on the first layer (30) a second layer (40) comprising a metal, the second layer (40) having a thickness of greater than 20 nm, wherein the first layer (30) is deposited directly onto the substrate (20), the second layer (40) comprising the metal is deposited directly onto the first layer (30), or both,

   wherein the inorganic material comprises aluminum zinc oxide (AZO), indium tin oxide (ITO), antimony tin oxide (ATO), fluorine tin oxide (FTO), or any combination thereof.

12. The method of claim 11, wherein the first layer (30) is deposited by sputtering, the second layer (40) is deposited by sputtering, or both.

13. The method of claim 11, wherein the first layer (30) and the second layer (40) are deposited simultaneously using a roll-to-roll coater.

**Patentansprüche**

1. Elektrode, umfassend:

   ein Substrat (20);
   eine erste Schicht (30), die ein anorganisches Material umfasst; und
   eine zweite Schicht (40), die ein Metall umfasst und eine Durchlässigkeit für sichtbares Licht von 40 % oder weniger aufweist,
   wobei die erste Schicht (20) zwischen dem Substrat (20) und der zweiten Schicht (40) angeordnet ist,
   wobei die erste Schicht (30) das Substrat (20) direkt berührt und die zweite Schicht (40) die erste Schicht (30) direkt berührt, und wobei das anorganische Material Aluminiumzinkoxid (AZO), Indiumzinnoxid (ITO), Antimonzinnoxid (ATO), Fluorzinnoxid (FTO) oder eine beliebige Kombination davon umfasst.

2. Elektrode nach Anspruch 1, wobei die zweite Schicht (40)

   (b) eine Dicke von mehr als 20 nm aufweist oder
   (c) einen Flächenwiderstand von 2,0 Ohm/sq oder weniger aufweist.

3. Elektrode nach einem der vorhergehenden Ansprüche, wobei das anorganische Material der ersten Schicht (30) einen Gitterparameter a1 aufweist und das Metall der zweiten Schicht (40) einen Gitterparameter a2 aufweist, wobei a1 und a2 die folgende Formel erfüllen:

$$([sqrt(2)/2]*a2)/a1 = x,$$

   wobei x für einen Wert in einem Bereich von 0,75 bis 1,4 steht.

4. Elektrode nach einem der vorhergehenden Ansprüche, wobei die erste Schicht (30) das anorganische Material in einer Menge von 50 Gew.-% bis 100 Gew.-% der ersten Schicht (30) umfasst.

5. Elektrode nach einem der vorhergehenden Ansprüche, wobei die ein Metall umfassende Schicht (40) ein Edelmetall umfasst.

**6.** Elektrode nach einem der vorhergehenden Ansprüchewobei die ein Metall umfassende Schicht (40) eine Dicke von 50 nm aufweist und die Elektrode einen Flächenwiderstand von nicht mehr als 1,50 Ohm/sq aufweist.

**7.** Elektrode nach einem der vorhergehenden Ansprüche, wobei die ein Metall umfassende Schicht (40) eine Dicke von 20 nm bis 70 nm aufweist.

**8.** Elektrode nach einem der vorhergehenden Ansprüche, wobei die erste Schicht (30) das anorganische Material in einer Menge von nicht mehr als 75 Gew.-% der ersten Schicht umfasst.

**9.** Elektrode nach einem der vorhergehenden Ansprüche, wobei die erste Schicht (30) das anorganische Material in einer Menge von nicht weniger als 50 Gew.-% der ersten Schicht (30) umfasst.

**10.** Biosensorteststreifen, umfassend eine Elektrode nach einem der vorhergehenden Ansprüche.

**11.** Verfahren zum Bilden einer Elektrode, umfassend:

Bereitstellen eines Substrats (20);
Abscheiden einer ersten Schicht (30), die ein anorganisches Material umfasst, auf dem Substrat (20); und heteroepitaktisches Abscheiden einer zweiten Schicht (40), die ein Metall umfasst, auf der ersten Schicht (30), wobei die zweite Schicht (40) eine Dicke von mehr als 20 nm aufweist, wobei die erste Schicht (30) direkt auf dem Substrat (20) abgeschieden wird, die zweite Schicht (40), die das Metall umfasst, direkt auf der ersten Schicht (30) oder beiden abgeschieden wird, wobei das anorganische Material Aluminiumzinkoxid (AZO), Indiumzinnoxid (ITO), Antimonzinnoxid (ATO), Fluorzinnoxid (FTO) oder eine beliebige Kombination davon umfasst.

**12.** Verfahren nach Anspruch 11, wobei die erste Schicht (30) durch Zerstäuben abgeschieden wird, die zweite Schicht (40) durch Zerstäuben oder beides abgeschieden wird.

**13.** Verfahren nach Anspruch 11, wobei die erste Schicht (30) und die zweite Schicht (40) gleichzeitig unter Verwendung einer Rolle-zu-Rolle-Beschichtungsvorrichtung abgeschieden werden.

## Revendications

**1.** Électrode comprenant :

un substrat (20) ;
une première couche (30) comprenant un matériau inorganique ; et
une seconde couche (40) comprenant un métal et ayant une transmittance de lumière visible inférieure ou égale à 40 %,
la première couche (20) étant disposée entre le substrat (20) et la seconde couche (40),
la première couche (30) étant directement en contact avec le substrat (20) et la seconde couche (40) étant directement en contact avec la première couche (30), et le matériau inorganique comprenant de l'oxyde d'aluminium et de zinc (AZO), de l'oxyde d'étain indium (ITO), de l'oxyde d'antimoine et d'étain (ATO), de l'oxyde de fluor et d'étain (FTO) ou une quelconque de leur combinaison.

**2.** Électrode selon la revendication 1, la seconde couche (40)

(b) ayant une épaisseur supérieure à 20 nm, ou
(c) ayant une résistance carrée inférieure ou égale à 2,0 Ohm/carré.

**3.** Électrode selon l'une quelconque des revendications précédentes, le matériau inorganique de la première couche (30) ayant un paramètre de maille a1 et le métal de la seconde couche (40) ayant un paramètre de maille a2, a1 et a2 satisfaisant la formule suivante :

$$([sqrt(2)/2]*a_2)/a_1 = x,$$

x représentant une valeur comprise entre 0,75 et 1,4.

4. Électrode selon l'une quelconque des revendications précédentes, la première couche (30) comprenant le matériau inorganique dans une quantité comprise entre 50 % et 100 % en poids de la première couche (30).

5. Électrode selon l'une quelconque des revendications précédentes, la couche (40) comprenant un métal comprenant un métal noble.

6. Électrode selon l'une quelconque des revendications précédentes, la couche (40) comprenant un métal ayant une épaisseur de 50 nm et l'électrode ayant une résistance carrée inférieure ou égale à 1,50 Ohm/carré.

7. Électrode selon l'une quelconque des revendications précédentes, la couche (40) comprenant un métal ayant une épaisseur comprise entre 20 nm et 70 nm.

8. Électrode selon l'une quelconque des revendications précédentes, la première couche (30) comprenant le matériau inorganique dans une quantité inférieure ou égale à 75 % en poids de la première couche.

9. Électrode selon l'une quelconque des revendications précédentes, la première couche (30) comprenant le matériau inorganique dans une quantité supérieure ou égale à 50 % en poids de la première couche (30).

10. Bandelette réactive de biocapteur comprenant une électrode selon l'une quelconque des revendications précédentes.

11. Procédé de formation d'une électrode, consistant à :

fournir un substrat (20) ;
déposer sur le substrat (20) une première couche (30) comprenant un matériau inorganique ; et
déposer de manière hétéroépitaxiale sur la première couche (30) une seconde couche (40) comprenant un métal, la seconde couche (40) ayant une épaisseur supérieure à 20 nm, la première couche (30) étant déposée directement sur le substrat (20), la seconde couche (40) comprenant le métal déposé directement sur la première couche (30), ou les deux, le matériau inorganique comprenant de l'oxyde d'aluminium et de zinc (AZO), de l'oxyde d'indium et d'étain (ITO), de l'oxyde d'antimoine et d'étain (ATO), de l'oxyde de fluor et d'étain (FTO) ou une quelconque de leur combinaison.

12. Procédé selon la revendication 11, la première couche (30) étant déposée par pulvérisation cathodique, la seconde couche (40) étant déposée par pulvérisation cathodique ou les deux.

13. Procédé selon la revendication 11, la première couche (30) et la seconde couche (40) étant déposées simultanément à l'aide d'une machine à enduire rouleau à rouleau.

40 → | Metal |
30 → | Dielectric      22↓ |
20 → | Substrate |

FIG

## REFERENCES CITED IN THE DESCRIPTION

**Patent documents cited in the description**

- WO 2013052092 A